# EUROPEAN PATENT APPLICATION

(11) **EP 4 507 063 A1**
(43) Date of publication of application: **12.02.2025**
(21) Application number: 22956777.1
(22) Date of filing: 30.08.2022
(51) Int. Cl.: H01M 10/48

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Long, Ningde, Fujian 352100 (CN); LIN, Denghua, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Herrmann, Uwe
(86) International application number: PCT/CN2022/115749
(87) International publication number: WO 2024/044943

(57) **Abstract**

The embodiments of the application provide a battery cell, a battery and an electric device. The battery cell includes a housing, an electrode assembly and a detection member. The housing includes an accommodation cavity. The electrode assembly is received in the accommodation cavity. The detection member includes a sensor and a connector, the sensor is connected to the housing by the connector, and the sensor is used to detect status information of the battery cell and generate a signal, and the connector is used to transmit the signal. The sensor can detect the status information of the battery cell in real time, so as to regulate the battery cell based on the status information of the battery cell, improve a cycling performance of the battery cell, reduce a safety risk and extend a cycle life of the battery cell.

## Description

### TECHNICAL FIELD

The application relates to the field of battery technology, and in particular to a battery cell, a battery and an electric device.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc.

How to enhance the safety of the battery cells is a research direction in the battery technology.

### SUMMARY

The application provides a battery cell, a battery and an electric device, which can improve safety.

In a first aspect, the embodiments of the application provide a battery cell including a housing, an electrode assembly and a detection member. The housing includes an accommodation cavity. The electrode assembly is received in the accommodation cavity. The detection member includes a sensor and a connector, the sensor is connected to the housing by the connector, and the sensor is used to detect status information of the battery cell and generate a signal, and the connector is used to transmit the signal.

The sensor can detect the status information of the battery cell in real time, so as to regulate the battery cell based on the status information of the battery cell, improve a cycling performance of the battery cell, reduce a safety risk and extend a cycle life of the battery cell. The connector can simultaneously play the role of fixing the sensor and transmitting signals, thereby simplifying the structure of the battery cell and reducing a risk of sensor damage.

In some embodiments, the status information of the battery cell includes at least one of an internal gas pressure of the battery cell, a temperature of the battery cell, an internal gas composition of the battery cell or a deformation amount of the electrode assembly.

In some embodiments, the connector includes an optical fiber. The optical fiber sensing technology has a high sensitivity and can achieve real-time monitoring, can timely alarm in the event of a problem with a battery cell, facilitating replacing the faulty battery cell, improving the battery life, and saving costs.

In some embodiments, the sensor includes at least one of a Bragg grating or a Fabry Perot resonant cavity. By providing a Bragg grating, it is possible to expediently test a change in a temperature and a stress and the like inside the battery cell. By providing a Fabry Perot resonant cavity as a gas pressure sensor, it is possible to accurately monitor an gas pressure inside the battery cell in real time.

In some embodiments, the housing includes a first wall, and the first wall is provided with a first through hole in communication with the accommodation cavity. The sensor is located on a side of the first wall away from the accommodation cavity, and the sensor is configured to detect the status information of the battery cell by the first through hole.

By arranging the sensor on the outer side of the first wall, it is possible to facilitate installation and replacement of the sensor, simplifying the assembly process. By opening the first through hole in the first wall, it is possible to enable the sensor to detect the status information inside the battery cell.

In some embodiments, in an axial direction of the first through hole, the sensor is opposite to the first through hole. The detection signal emitted by the sensor may enter the accommodation cavity through the first through hole to facilitate the sensor detecting the status information inside the battery cell.

In some embodiments, the sensor is connected to the first wall and covers the first through hole. By connecting the sensor to the first wall, it is possible to reduce a risk of sensor shaking during vibration of the battery cell, improve the stability of the sensor, and improve detection accuracy of the sensor. The sensor can cover the first through hole to reduce the risk of leakage of the electrolyte solution through the first through hole and improve safety.

In some embodiments, the detection member further includes a fixing member, and the connector is connected to the first wall by the fixing member.

In some embodiments, a surface of the fixing member facing towards the first wall abuts with the first wall, the fixing member is provided with an accommodation recess recessed from the surface of the fixing member facing towards the first wall, and the accommodation recess is in communication with the first through hole. The sensor is accommodated in the accommodation recess, and the connector is connected to the fixing member and passes through the fixing member.

The fixing member can protect the sensor from the outside, reduce a risk of contamination and damage of the sensor from external impurities, and improve accuracy of the sensor. The connector passes through the fixing member so as to facilitate connection with a device outside the fixing member.

In some embodiments, a bottom wall of the accommodation recess is provided with a second through hole, and the connector passes through the fixing member via the second through hole. The connector that enters the accommodation recess via the second through hole can pull up the sensor, so as to connect the sensor to the fixing member, thereby improving the stability of the detection member.

In some embodiments, the detection member further includes a seal, and the seal connects a hole wall of the second through hole and the connector and seals the second through hole. The seal seals the second through hole so as to reduce a risk of leakage of the electrolyte solution through the second through hole and improve safety. The seal can serve both the function of connecting the fixing member and the connector and the function of sealing, thereby simplifying the structure of the detection member.

In some embodiments, the seal is adhered to the hole wall of the second through hole and the connector. The process of adhering is easy to implement and can reduce a risk of damaging the connector, improving accuracy of signal transmission.

In some embodiments, the fixing member is welded to the first wall. Welding can improve connection strength of the fixing member, improve sealing, and reduce a risk of leakage of the electrolyte solution through a gap between the fixing member and the first wall.

In some embodiments, a side of the first wall away from the accommodation cavity is provided with a positioning recess, and the first through hole penetrates through a bottom wall of the positioning recess. At least a part of the fixing member is accommodated in the positioning recess.

The positioning recess can play a role of positioning when assembling the fixing member and the first wall, simplifying the assembly process and improving assembly efficiency. The positioning recess can also accommodate at least a part of the fixing member so as to reduce the size of the fixing member protruding from the first wall, reduce the space occupied by the fixing member, and improve the energy density of the battery cell.

In some embodiments, the fixing member includes a fixing body and a flange surrounding outside the fixing body, the fixing body is provided with the accommodation recess, at least a part of the flange is accommodated in the positioning recess, and an outer peripheral surface of the flange is connected to a side wall of the positioning recess.

By providing the flange, it is possible to increase a distance between the side wall of the positioning recess and the fixing body, reduce a risk of damaging the fixing body when connecting the flange and the side wall of the positioning recess, and improve sealing performance.

In some embodiments, the flange abuts with the bottom wall of the positioning recess, so as to increase a contact area between the first wall and the fixing member and improve stability of connection between the first wall and the fixing member.

In some embodiments, the accommodation recess is stepped and includes a first section and a second section, and the second section is located on a side of the first section away from the first through hole. A cross section of the first section perpendicular to an axial direction of the first through hole is smaller than a cross section of the second section perpendicular to the axial direction of the first through hole. The sensor is accommodated in the second section.

The second section has a larger cross section area so as to provide a sufficient accommodation space for the sensor. The accommodation recess is configured as a stepped shape to reduce a size of an opening of the recess close to the first through hole, thereby increasing the contact area between the fixing body and the first wall, and improving stability.

In some embodiments, the housing further includes an electrode terminal arranged on the first wall, the electrode assembly includes an electrode tab, and the electrode terminal is electrically connected to the electrode tab. In a direction perpendicular to the first wall, an end of the fixing member away from the first wall does not extend beyond the electrode terminal.

The aforesaid technical solution can utilize the space occupied by the electrode terminal in the direction perpendicular to the first wall to arrange the fixing member, and the fixing member will not increase the size of the battery cell in the direction perpendicular to the first wall, thereby improving the space utilization and energy density of the battery cell.

In some embodiments, the battery cell is configured to inject electrolyte solution via the first through hole. By using the first through hole as the liquid injection hole of the battery cell and using the detection member to seal the first through hole, it is possible to reduce openings of the housing and eliminate the need for conventional sealing elements, thereby simplifying the structure of the battery cell.

In some embodiments, the housing is provided with an eduction through hole in communication with the accommodation cavity. The sensor is accommodated in the accommodation cavity, and at least a part of the connector is accommodated in the eduction through hole and connected to the housing.

By arranging the sensor inside the accommodation cavity, it is possible to improve utilization of the internal space of the battery cell and improve accuracy of the sensor in detecting the status information inside the battery cell. By providing a through hole, it is possible to expose at least a part of the connector and facilitate the connector transmitting signals to the outside of the housing.

In some embodiments, the detection member further includes a seal, and the seal connects a hole wall of the eduction through hole and the connector and seals the eduction through hole. The seal seals the eduction through hole so as to reduce a risk of leakage of the electrolyte solution through the eduction through hole and improve safety. The seal can serve both the function of connecting the hole wall of the eduction through hole and the connector and the function of sealing, thereby simplifying the structure of the detection member.

In some embodiments, a surface of the sensor facing towards the electrode assembly is provided with an insulation layer. By providing the insulation layer, it is possible to reduce a risk of the sensor conducting positive and negative electrodes during vibration of the battery cell, and improve safety.

In some embodiments, the housing includes a first wall, and the sensor is located on a side of the first wall facing towards the electrode assembly and spaced apart from the first wall. By arranging the sensor spaced apart from the first wall, it is possible to provide an activity space for the sensor, thereby reducing a force at the connection between the sensor and the connector during vibration of the battery cell, reducing a risk of connection failure between the sensor and the connector, and improving safety of the battery cell.

In some embodiments, the battery cell is configured to inject electrolyte solution via the eduction through hole. By using the eduction through hole as the liquid injection hole of the battery cell and using the detection member to seal the first through hole, it is possible to reduce openings of the housing and eliminate the need for conventional sealing elements, thereby simplifying the structure of the battery cell.

In some embodiments, the battery cell further includes an insulation member arranged on the surface of the first wall facing towards the electrode assembly. The sensor is located on a side of the insulation member away from the first wall. The insulation member is provided with a first avoidance hole opposite to the eduction through hole, and the connector extends into the eduction through hole via the first avoidance hole.

The insulation member is used to separate the first wall from the electrode assembly in an insulated way, so as to reduce a risk of the first wall conducting the positive and negative electrodes of the electrode assembly and improve safety. By opening the first avoidance hole, it is possible to reduce a risk of interference between the insulation member and the connector.

In some embodiments, the insulation member is spaced apart from the sensor. By arranging the sensor spaced apart from the insulation member, it is possible to provide an activity space for the sensor, thereby reducing a force at the connection between the sensor and the connector during vibration of the battery cell, reducing a risk of connection failure between the sensor and the connector, and improving safety of the battery cell.

In some embodiments, a part of the connector extends to the outside of the housing via the eduction through hole, so as to facilitate connection of the connector and a device outside the housing.

In some embodiments, the housing includes a housing body and an end cap, the housing body includes an opening, and the end cap is used to cap the opening. The end cap is the first wall of the housing. Compared to the housing, the end cap has a larger thickness. By arranging the detection member on the end cap, it is possible to provide stable support for the detection member and improve stability of the detection member.

In some embodiments, the housing includes an electrode terminal, the electrode assembly includes an electrode tab, and the electrode terminal is electrically connected to the electrode tab. The eduction through hole is arranged in the electrode terminal, and the sensor is arranged on a side of the electrode terminal facing towards the electrode assembly. By arranging the eduction through hole in the electrode terminal, it is possible to improve space utilization of the battery cell.

In some embodiments, the battery cell further includes an adapter member for connecting the electrode tab and the electrode terminal. The adapter member includes a terminal connection portion abutting with a surface of the electrode terminal facing towards the electrode assembly, and the terminal connection portion is provided with a second avoidance hole opposite to the eduction through hole. The sensor is located on a side of the terminal connection portion away from the electrode terminal, and the connector extends into the eduction through hole via the second avoidance hole. By opening the second avoidance hole, it is possible to reduce a risk of interference between the adapter member and the connector, allowing the connector to smoothly extend into the eduction through hole.

In some embodiments, the terminal connection portion is spaced apart from the sensor. By arranging the sensor spaced apart from the terminal connection portion, it is possible to provide an activity space for the sensor, thereby reducing a force at the connection between the sensor and the connector during vibration of the battery cell, reducing a risk of connection failure between the sensor and the connector, and improving safety of the battery cell.

In some embodiments, the connector does not protrude from a surface of the electrode terminal away from the electrode assembly. The surface of the electrode terminal away from the electrode assembly usually need to be connected to a busbar, and the aforesaid technical solution can reduce a risk of interference between the connector and the busbar.

In some embodiments, the adapter member includes an adapter body and an adapter protrusion, the adapter body is connected to the electrode tab, and the adapter protrusion protrudes from a surface of the adapter body facing towards the electrode terminal. The adapter member forms an adapter recess at a position corresponding to the adapter protrusion, and a bottom wall of the adapter recess forms the terminal connection portion. The sensor is accommodated in the adapter recess. By arranging the sensor in the adapter recess, it is possible to improve space utilization. The side wall of the adapter recess can limit the sensor so as to reduce the amplitude of the sensor shaking during vibration of the battery cell.

In some embodiments, the battery cell is a cylindrical battery cell or a cuboid battery cell.

In a second aspect, the embodiments of the application provide a battery including a plurality of battery cells provided by any embodiment of the first aspect.

In a third aspect, the embodiments of the application provide an electric device including the battery cell provided by any embodiment of the first aspect used to provide electrical energy.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Fig. 1 is a schematic structural view of a vehicle provided by some embodiments of the application;
Fig. 2 is a schematic explosive view of a battery provided by some embodiments of the application;
Fig. 3 is a schematic structural perspective view of a battery cell provided by some embodiments of the application;
Fig. 4 is a schematic sectional view of the battery cell as shown in Fig. 3;
Fig. 5 is a schematic enlarged view at the circle A of Fig. 4;
Fig. 6 is a schematic partial sectional view of a battery cell provided by some further embodiments of the application;
Fig. 7 is a schematic partial sectional view of a battery cell provided by some further embodiments of the application;
Fig. 8 is a schematic sectional view of a battery cell provided by some further embodiments of the application;
Fig. 9 is a schematic structural perspective view of a battery cell provided by some further embodiments of the application;
Fig. 10 is a schematic sectional view of the battery cell as shown in Fig. 9;
Fig. 11 is a schematic structural perspective view of a battery cell provided by some further embodiments of the application;
Fig. 12 is a schematic sectional view of the battery cell as shown in Fig. 11;
Fig. 13 is a schematic enlarged view at the circle B of Fig. 12;
Fig. 14 is a schematic sectional view of a battery cell provided by some further embodiments of the application;
Fig. 15 is a schematic sectional view of a battery cell provided by some further embodiments of the application;
Fig. 16 is a schematic enlarged view at the circle C of Fig. 15.

The views are not necessarily plotted in actual proportion in the drawings.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application.

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application.

The battery mentioned in the embodiments of the application refers to a single physical module including one or more battery cells to provide higher voltage and capacity. For example, the battery mentioned in the application may include a battery module or a battery pack or the like. The battery generally includes a case for packaging one or more battery cells. The case can prevent liquid or other foreign matter from affecting the charging or discharging of the battery cell.

The battery cell includes an electrode assembly and electrolyte solution, and the electrode includes a positive electrode sheet, a negative electrode sheet, and a separator. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode coating area and a positive electrode tab connected to the positive electrode coating area. The positive electrode coating area is coated with the positive electrode active material layer, and the positive electrode tab is not coated with the positive electrode active material layer. Taking a lithium ion battery cell as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode coating area and a negative electrode tab connected to the negative electrode coating area. The negative electrode coating area is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator may be PP (polypropylene) or PE (polyethylene) or the like.

The battery cell further includes a housing, and an accommodation cavity for accommodating the electrode assembly is formed inside the housing. The housing may protect the electrode assembly from the outside to prevent external foreign matter from affecting charging or discharging of the electrode assembly.

During the cycling process of battery cells, abnormal situations may occur. For example, after multiple cycles of charging and discharging, a side reaction may occur inside a battery cell and continuously produce gas. The gas will increase the gas pressure inside the battery cell, thereby leading to a risk of the housing deforming and breaking. For example, when a short circuit occurs inside a battery cell, the battery cell generates heat and heats up, thereby leading to a risk of thermal runaway of the battery cell.

If abnormal situations of battery cells cannot be detected and dealt with timely during use of the batteries, it will lead to the deterioration of battery cells and cause safety accidents.

The inventor has attempted to install a detection member on the circuit board of the battery to detect the operation state of the battery cells in real-time, in order to determine whether there are any abnormalities in the battery cells. However, the inventor has found that the space on the circuit board is limited, making it difficult to individually test each battery cell, resulting in biased test results.

In view of this, the embodiments of the application provides a technical solution that integrate a detection member into the battery cell to detect the status information of each battery cell in real time, so as to regulate the battery cell based on the status information of the battery cell, improve a cycling performance of the battery cell, reduce a safety risk and extend a cycle life of the battery cell.

The technical solutions described in the embodiments of the application are applicable to batteries and electric devices employing batteries.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

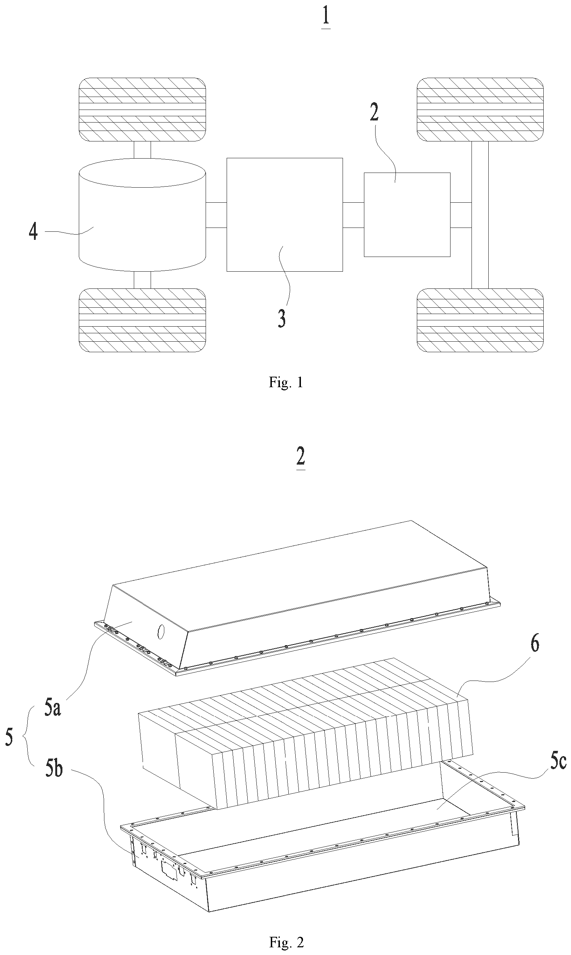

Fig. 1 is a schematic structural view of a vehicle provided by some embodiments of the application.

As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 3 and a motor 4. A controller 3 is used for controlling the battery 2 to power the motor 4, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

Fig. 2 is a schematic explosive view of a battery provided by some embodiments of the application.

As shown in Fig. 2, the battery 2 includes a case 5 and a battery cell 6 (not shown), and the battery cell 6 is accommodated in the case 5.

The case 5 is used for accommodating the battery cell 6, and the case 5 may have various structures. In some embodiments, the case 5 may include a first case portion 5a and a second case portion 5b capped by each other. The first case portion 5a and the second case portion 5b together define an accommodation space 5c for accommodating the battery cell 6. The second case portion 5b may be of a hollow structure with one end open, the first case portion 5a is of a plate-like structure, and the first case portion 5a is capped to the open side of the second case portion 5b to form the case 5 with the accommodation space 5c. Also, each of the first case portion 5a and the second case portion 5b may be of a hollow structure with one side open, and the open side of the first case portion 5a is capped to the open side of the second case portion 5b to form the case 5 with the accommodation space 5c. Of course, the first case portion 5a and the second case portion 5b may have various shapes, such as a cylinder, a cuboid and the like.

In order to increase the seal property after the first case portion 5a and the second case portion 5b are connected, a seal member, such as seal glue or a seal ring, may be provided between the first case portion 5a and the second case portion 5b.

If the first case portion 5a is capped on the top of the second case portion 5b, the first case portion 5a may also be referred to as an upper case cover, and the second case portion 5b may also be referred to as a lower case body.

In the battery 2, the amount of battery cell 6 may be single or plural. If there are a plurality of battery cells 6, the plurality of battery cells 6 may be connected in series or in parallel or in a mixed manner, wherein the mixed manner means that the plurality of battery cells 6 are connected both in series and in parallel. The plurality of battery cells 6 may be directly connected together in series or in parallel or in the mixed manner, and the entirety constituted by the plurality of battery cells 6 is accommodated inside the case 5. Of course, the plurality of battery cells 6 may also be connected in series or in parallel or in the mixed manner to form battery modules at first, and then a plurality of battery modules may be connected in series or in parallel or in the mixed manner to form an entirety and be accommodated inside the case 5.

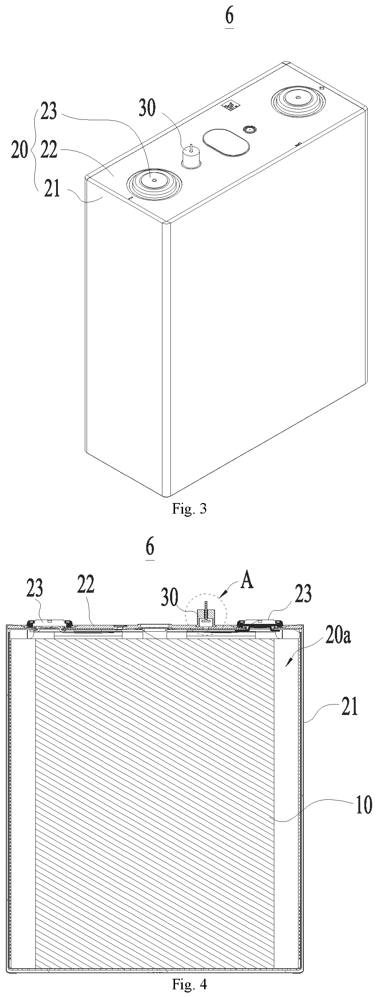

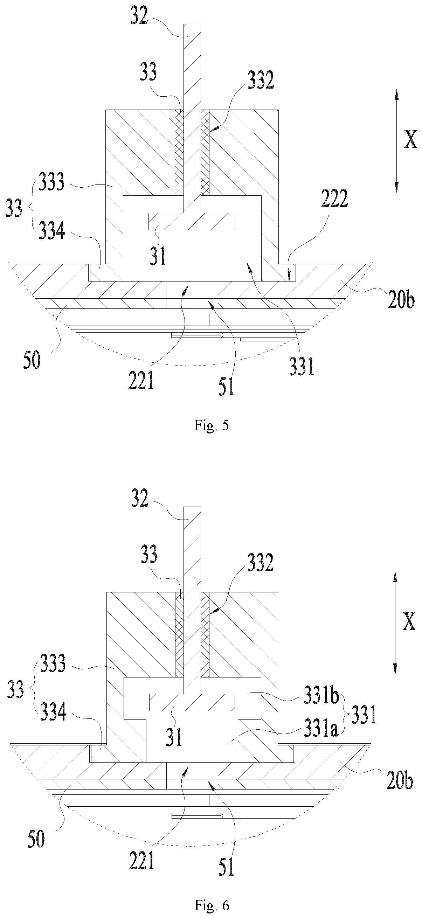

Fig. 3 is a schematic structural perspective view of a battery cell provided by some embodiments of the application; Fig. 4 is a schematic sectional view of the battery cell as shown in Fig. 3; Fig. 5 is a schematic enlarged view at the circle A of Fig. 4.

As shown in Figs. 3-5, the embodiments of the application provide a battery cell 6 including a housing 20, an electrode assembly 10 and a detection member 30. The housing 20 includes an accommodation cavity 20a. The electrode assembly 10 is received in the accommodation cavity 20a. The detection member 30 is connected to the housing 20 and used to detect status information of the battery cell 6.

The housing 20 is of a hollow structure inside which an accommodation cavity 20a for accommodating the electrode assembly 10 and the electrolyte solution is formed. The shape of the housing 20 may be determined according to a specific shape of the electrode assembly 10. For example, if the electrode assembly 10 is of a cuboid structure, the housing may be selected to be cuboid, and if the electrode assembly 10 is of a cylindrical structure, the housing may be selected to be cylindrical.

The material of housing 20 may be various, for example, the material of the housing 20 may be metal or plastic. Optionally, the material of the housing 20 may be copper, iron, aluminum, steel, or aluminum.

The electrode assembly 10 includes a positive electrode sheet and a negative electrode sheet. For example, the electrode assembly 10 generates electrical energy through oxidation and reduction reactions during the insertion/extraction of ions in the positive and negative electrode sheets. Optionally, the electrode assembly 10 further includes a separator membrane used to separate the positive electrode sheet from the negative electrode sheet in an insulated way.

The electrode assembly 10 may be a wound electrode assembly, a laminated electrode assembly, or an electrode assembly of other types.

The amount of the electrode assembly 10 may be single, and may also be plural. When there are a plurality of electrode assemblies 10, the plurality of electrode assemblies 10 may be arranged in layers.

The status information of the battery cell 6 is information that characterizes the operation state of the battery cell 6. For example, the status information of the battery cell 6 may include at least one of an internal gas pressure of the battery cell, a temperature of the battery cell, an internal gas composition of the battery cell, a deformation amount of the electrode assembly, a deformation amount of the housing, a growth status of dendrites inside the electrode assembly, or an internal electricity level of the battery cell.

The detection member 30 may be arranged as a whole inside the housing 20 or may also be arranged as a whole outside the housing 20. Alternatively, a part of the detection member 30 may be arranged inside the housing 20 and a part may be arranged outside the housing 20.

The detection member 30 may be directly connected to the housing 20, or may also be indirectly connected to the housing 20 through other components.

In the embodiments of the application, the detection member 30 is integrated into the battery cell 6 to detect the status information of the battery cell 6 in real time, so as to regulate the battery cell 6 based on the status information of the battery cell 6, improve a cycling performance of the battery cell 6, reduce a safety risk and extend a cycle life of the battery cell 6.

In some embodiments, the detection member 30 includes a sensor 31 and a connector 32, the sensor 31 is connected to the housing 20 by the connector 32, and the sensor 31 is used to detect the status information of the battery cell 6 and generate a signal, and the connector 32 is used to transmit the signal.

The sensor 31 may be a resistive sensor, an inductive sensor, a capacitive sensor, a piezoelectric sensor, a magneto electric sensor, a thermoelectric sensor, a photoelectric sensor, a digital sensor, an optical fiber sensor, an ultrasonic sensor, a thermal sensor, or other types of sensors.

The amount of the sensor 31 of the detection member 30 may be single or plural.

The sensor 31 may be arranged inside the accommodation cavity 20a of the housing 20 or may also be arranged outside the housing 20.

The connector 32 may be directly connected to the housing 20 or may also be indirectly connected to the housing 20 through other components. The sensor 31 is fixed to the housing 20 by the connector 32.

The connector 32 may be used to transmit signals. For example, the connector 32 may be used to transmit a signal generated by the sensor 31 to a data processing unit of the battery, or to transmit a signal emitted by the data processing unit to the sensor 31. For example, signal transmission between the connector 32 and the data processing unit may be achieved by a cable or may also be achieved by wireless transmission technology.

In the embodiments of the application, the sensor 31 can detect the status information of the battery cell 6 in real time, so as to regulate the battery cell 6 based on the status information of the battery cell 6, improve a cycling performance of the battery cell 6, reduce a safety risk and extend a cycle life of the battery cell 6. The connector 32 can simultaneously play the role of fixing the sensor 31 and transmitting signals, thereby simplifying the structure of the battery cell 6 and reducing a risk of damaging the sensor 31.

In some embodiments, the status information of the battery cell 6 includes at least one of an internal gas pressure of the battery cell, a temperature of the battery cell, an internal gas composition of the battery cell or a deformation amount of the electrode assembly.

For example, the sensor 31 may include a temperature sensor, and the temperature sensor may be arranged outside the housing 20 and in contact with the housing 20 to detect the temperature of the housing 20. Alternatively, the temperature sensor may also be arranged inside the accommodation cavity 20a of the housing 20 and detect the temperature inside the battery cell 6.

For example, the sensor 31 may include a hydrogen sensor. The hydrogen sensor 31 may be arranged inside the accommodation cavity 20a of the housing 20 to detect the hydrogen composition inside the battery cell 6. Alternatively, the hydrogen sensor may also be arranged outside the housing 20, the housing 20 may be provided with a channel, and the gas inside the battery cell 6 can act on the hydrogen sensor through the channel.

Of course, the sensor 31 may also include a sensor for detecting other components.

For example, the sensor 31 may include a gas pressure sensor. The gas pressure sensor may be arranged inside the accommodation cavity 20a of the housing 20 to detect the gas pressure inside the battery cell 6. Alternatively, the gas pressure sensor may also be arranged outside the housing 20, the housing 20 may be provided with a channel, and the gas inside the battery cell 6 can act on the gas pressure sensor through the channel.

For example, the sensor 31 may include a displacement sensor. The displacement sensor may be arranged in the accommodation cavity 20a of the housing 20 and abut with the electrode assembly 10. The displacement sensor can measure the expansion deformation of the electrode assembly 10 during charging and discharging process.

For example, the sensor 31 may include a stress sensor. The stress sensor may be inserted between the positive and negative electrode sheets of the electrode assembly 10 to measure a stress change between the positive and negative electrode sheets.

In some embodiments, the connector 32 includes an optical fiber. For example, the optical fiber and the sensor 31 constitute an optical fiber sensor.

The core of the optical fiber sensing technology is the optical fiber -- a thin glass line in the center of which light waves can propagate. The optical fiber mainly consists of three parts: a fiber core, a cladding, and a protective layer. The cladding can reflect the stray light waves emitted by the fiber core back into the fiber core, so as to ensure that the the light waves have the lowest transmission loss in the fiber core. The implementation principle of this function is that the refractive index of the fiber core is higher than the refractive index of the cladding, so that when the light waves propagate from the fiber core to the cladding, a total internal reflection occurs. The outermost protective layer provides a protective effect to prevent a damage to the optical fiber caused by the external environment or an external force.

A diameter of the optical fiber is between 10µm-10mm, and the material is high-purity quartz glass or fully plastic optical fiber. The length can be customized according to needs. The protective layer material outside the optical fiber is made of a material such as acrylic ester, silicone rubber, nylon, polyimide and the like.

The optical fiber sensing technology has a high sensitivity and can achieve real-time monitoring, can timely alarm in the event of a problem with a battery cell, facilitating replacing the faulty battery cell 6, improving the battery life, and saving costs.

In some embodiments, the sensor 3 includes at least one of a Bragg grating or a Fabry Perot resonant cavity.

FBG refers to fiber Bragg grating, which forms a spatial phase periodic grating inside the fiber core. Its essence is to form a narrowband filter and reflector inside the fiber core.

The fiber Bragg grating (FBG) sensor is a type of optical fiber sensor with the highest use frequency and widest use range. This type of sensor can change the wavelength of the reflected light waves according to changes in environmental temperature and/or strain. The fiber Bragg grating is to use holographic interferometry or phase mask to expose a small segment of light sensitive fiber under a light wave with a periodic distribution of light intensity. In this way, the refractive index of the optical fiber will permanently change based on the intensity of the light waves it is irradiated with. The periodic change in refractive index caused by this method is referred to as a fiber Bragg grating.

When a broad-spectrum beam of light is propagated to a fiber Bragg grating, each small segment of optical fiber after the refractive index is changed will only reflect a specific wavelength of light, which wavelength is referred to as a Bragg wavelength. This characteristic causes the fiber Bragg grating to only reflect a specific wavelength of light, while other wavelengths of light will be propagated.

Tilted Bragg gratings have been a research hotspot in optical fiber sensors in recent years. Using optical methods to engrave tilted Bragg gratings on the fiber core can break the cylindrical symmetry of the mode coupling process and promote the coupling of light from the fiber core to different cladding modes. The spectrum of this optical fiber grating sensor is an excellent narrow band resonant peak comb spectrum, providing a high-precision measurement tool for monitoring various small modulation changes. The cutoff mode in the cladding mode of tilted Bragg grating has a deep evanescent wave intensity and penetration depth, and is highly sensitive to changes in environmental refractive index. Therefore, the cutoff mode can be used to measure the refractive index and dendrite growth of the external environment, providing a high-precision measurement method for the growth of dendrites on the electrode surface inside the battery.

By providing a Bragg grating, it is possible to expediently test a change in a temperature and a stress and the like inside the battery cell 6.

F-P resonant cavity, also known as Fabry-Pérot cavity, is a type of optical resonant cavity composed of two parallel planar mirrors and is commonly used in semiconductor lasers.

From a fundamental perspective, optical fiber sensors will change one or several properties of the light waves they propagate based on changes in the external environmental parameters being tested, such as intensity, phase, polarization state, and frequency. Non intrinsic (hybrid) fiber optic sensors only use fiber optic as the transmission medium for light waves between equipment and sensing elements, while intrinsic fiber optic sensors use the fiber optic itself as a sensing element.

In optics, the Fabry Perot resonant cavity interferometer is a multi beam interferometer composed of two parallel glass plates, where the inner surfaces of the two glass plates opposite to each other have high reflectivity. The Fabry Perot interferometer is often referred to as a Fabry Perot resonant cavity, F-P cavity, or Fa-Pe cavity, and when two glass plates are separated and fixed by a fixed length hollow spacer, it is also referred to as a Fabry Perot etalon or simply referred to as a etalon, but these terms are not strictly distinguished when used. The characteristic of this interferometer is that when the frequency of the incident light meets its resonance condition, its transmission spectrum will have a high peak, corresponding to a high transmittance. The resonance characteristics of the Fabry Perot interferometer and the resonance characteristics utilized by the binomial chromatic filter are the same.

By providing a Fabry Perot resonant cavity as a gas pressure sensor, it is possible to accurately monitor a gas pressure inside the battery cell 6 in real time.

In some embodiments, the housing 20 includes a housing body 21 and an end cap 22, the housing body 21 has an opening, and the end cap 22 is used to cap the opening.

The housing body 21 and the end cap 22 are enclosed to form an accommodation cavity 20a.

The housing body 21 may be of various shapes such as a cuboid, a cylinder and a hexagonal prism and be of various dimensions. Specifically, the shape of the housing body 21 may be determined according to a specific shape and size of the electrode assembly 10. The housing body 21 may be of various materials, such as copper, iron, aluminum, stainless steel, aluminum alloy, plastic and the like, on which the embodiments of the application make no specific limitations.

Without limits, a shape of the end cap 22 may be adapted to a shape of the housing body 21 so as to fit the housing body 21. Optionally, the end cap 22 may be made of a material with a certain hardness and strength (such as aluminum alloy), so that the end cap 22 is less prone to deformation when subjected to compression and collision, enabling the battery cell 6 to have a higher structural strength and an improved safety performance. The end cap 22 is connected to the housing body 21 by welding, adhering, clamping, or other means.

The housing body 21 may be of a structure with one side open, and the amount of the end cap 22 is one and the end cap 22 is capped to the opening of the housing body 21. Alternatively, the housing body 21 may also be of a structure with two side open, the amount of the end caps 22 is set as two, and the two end caps 22 are capped to the two openings of the housing body 21 respectively.

In some embodiments, the battery cell 6 is a cylindrical battery cell. For example, the housing 20 of the battery cell 6 is cylindrical.

In some embodiments, the battery cell 6 is a rectangular battery cell. For example, the housing 20 of the battery cell 6 is cuboid.

In some embodiments, the housing 20 includes a first wall 20b, and the first wall 20b is provided with a first through hole 221 in communication with the accommodation cavity 20a. The sensor 31 is located on a side of the first wall 20b away from the accommodation cavity 20a, and the sensor 31 is configured to detect the status information of the battery cell 6 by the first through hole 221.

The first wall 20b may be the end cap 22 or may also be a part of the housing 21.

The amount of the first through hole 221 may be single, and may also be plural.

By arranging the sensor 31 on the outer side of the first wall 20b, it is possible to facilitate installation and replacement of the sensor 31, simplifying the assembly process. By opening the first through hole 221 in the first wall 20b, it is possible to enable the sensor 31 to detect the status information inside the battery cell 6.

For example, sensor 31 can detect the gas pressure, the temperature, the gas composition, or other status information inside the battery cell 6.

In some embodiments, in an axial direction X of the first through hole 221, the sensor 31 is opposite to the first through hole 221.

In the axial direction X of the first through hole 221, a projection of the sensor 31 and a projection of the first through hole 221 at least partially overlap with each other.

The sensor 31 may close the first through hole 221; alternatively, in the axial X of the first through hole 221, the sensor 31 may also be spaced apart from the first through hole 221.

The detection signal emitted by the sensor 31 may enter the accommodation cavity 20a through the first through hole 221 to facilitate the sensor 31 detecting the status information inside the battery cell 6.

In some embodiments, the detection member 30 further includes a fixing member 33, and the connector 32 is connected to the first wall 20b by the fixing member 33.

The fixing member 33 is connected to the first wall 20b by welding, adhering, clamping, or other means.

The connector 32 may be directly connected to the fixing member 33, or may also be indirectly connected to the fixing member 33 through other components. For example, the connector 32 may be adhered by glue or may also be integrated with the fixing member 33 by hot melt forming.

For example, the fixing member 33, the sensor 31, and the connector 32 of the detection member 30 may be pre-assembled together. When assembling the detection member 30 and the housing 20, the fixing member 33 is fixed to the first wall 20b of the housing 20.

In some embodiments, a surface of the fixing member 33 facing towards the first wall 20b abuts with the first wall 20b, the fixing member 33 is provided with an accommodation recess 331 recessed from the surface of the fixing member 33 facing towards the first wall 20b, and the accommodation recess 331 is in communication with the first through hole 221. The sensor 31 is accommodated in the accommodation recess 331, and the connector 32 is connected to the fixing member 33 and passes through the fixing member 33.

The connector 32 may pass through a bottom wall of the accommodation recess 331, or may also pass through a side wall of the accommodation recess 331.

The fixing member 33 can protect the sensor 31 from the outside, reduce a risk of contamination and damage of the sensor 31 from external impurities, and improve accuracy of the sensor 31. The connector 32 passes through the fixing member 33 so as to facilitate connection with a device outside the fixing member 33.

In some embodiments, the bottom wall of the accommodation recess 331 is provided with a second through hole 332, and the connector 32 passes through the fixing member 33 via the second through hole 332.

The connector 32 that enters the accommodation recess 331 via the second through hole 332 can pull up the sensor 31, so as to connect the sensor 31 to the fixing member 33, thereby improving the stability of the detection member 30.

For example, the connector 32 may be connected to a side of the sensor 31 away from the first through hole 221.

For example, the connector 32 may adopt a flexible structure. The connector 32 can pull the sensor 31 upwards, so that a flexible connector 32 can also achieve the fixation of the sensor 31. The flexible connector 32 is deformable, so as to facilitate connection with other components.

In some embodiments, the detection member 30 further includes a seal 34, and the seal 34 connects a hole wall of the second through hole 332 and the connector 32 and seals the second through hole 332.

The seal 34 may be connected to the hole wall of the second through hole 332 and the connector 32 by adhering, interference fit, fusion or other means.

The seal 34 seals the second through hole 332 so as to reduce a risk of leakage of the electrolyte solution through the second through hole 332 and improve safety. The seal 34 can serve both the function of connecting the fixing member 33 and the connector 32 and the function of sealing, thereby simplifying the structure of the detection member 30.

In some embodiments, the seal 34 is adhered to the hole wall of the second through hole 332 and the connector 32.

For example, a colloid may be filled between the hole wall of the second through hole 332 and the connector 32, and after the colloid solidifies, a seal 34 is formed.

The process of adhering is easy to implement and can reduce a risk of damaging the connector 32, improving accuracy of signal transmission.

In some embodiments, the fixing member 33 is welded to the first wall 20b. Welding can improve connection strength of the fixing member 33, improve sealing, and reduce a risk of leakage of the electrolyte solution through a gap between the fixing member 33 and the first wall 20b.

In some embodiments, the fixing member 33 may be a metal or plastic component. Optionally, the fixing element 33 is a metal component with a higher strength to stably support the connector 32 and the sensor 31.

In some embodiments, a side of the first wall 20b away from the accommodation cavity 20a is provided with a positioning recess 222, and the first through hole 221 penetrates through a bottom wall of the positioning recess 222. At least a part of the fixing member 33 is accommodated in the positioning recess 222.

The positioning recess 222 can play a role of positioning when assembling the fixing member 33 and the first wall 20b, simplifying the assembly process and improving assembly efficiency. The positioning recess 222 can also accommodate at least a part of the fixing member 33 so as to reduce the size of the fixing member 33 protruding from the first wall 20b, reduce the space occupied by the fixing member 33, and improve the energy density of the battery cell 6.

In some embodiments, the fixing member 33 includes a fixing body 333 and a flange 334 surrounding outside the fixing body 333. The fixing body 333 is provided with the accommodation recess 331, at least a part of the flange 334 is accommodated in the positioning recess 222, and an outer peripheral surface of the flange 334 is connected to a side wall of the positioning recess 222.

By providing the flange 334, it is possible to increase a distance between the side wall of the positioning recess 222 and the fixing body 333, reduce a risk of damaging the fixing body 333 when connecting the flange 334 and the side wall of the positioning recess 222, and improve sealing performance.

For example, laser may act on a junction of the flange 334 and the side wall of the positioning recess 222 to weld the flange 334 and the side wall of the positioning recess 222. By providing the flange 334, it is possible to increase the distance between the side wall of the positioning recess 222 and the fixing body 333, and reduce a risk of interference between the fixing body 333 and a welding equipment.

In some embodiments, the flange 334 abuts with the bottom wall of the positioning recess 222, so as to increase a contact area between the first wall 20b and the fixing member 33 and improve stability of connection between the first wall 20b and the fixing member 33.

In some embodiments, the flange 334 and the fixing body 333 are adhered to the bottom wall of the positioning recess 222.

In some embodiments, the surface of the flange 334 facing towards the bottom wall of the positioning recess 222 is flush with the surface of the fixing body 333 facing towards the bottom wall of the positioning recess 222.

In some embodiments, the end cap 22 is the first wall 20b of the housing 20. Compared to the housing 21, the end cap 22 has a larger thickness. By arranging the detection member 30 on the end cap 22, it is possible to provide stable support for the detection member 30 and improve stability of the detection member 30.

In some embodiments, the battery cell 6 is configured to inject electrolyte solution via the first through hole 221.

In the production process of battery cells, it is required to inject electrolyte solution into the interior of the housing. In order to achieve electrolyte solution injection, it is usually necessary to open a liquid injection hole in the battery cell. After the process related to the liquid injection hole is completed, a sealing plate needs to be installed on the housing to seal the liquid injection hole.

In the embodiments of the application, by using the first through hole 221 as the liquid injection hole of the battery cell 6 and using the detection member 30 to seal the first through hole 221, it is possible to reduce openings of the housing 20 and eliminate the need for conventional sealing plates, thereby simplifying the structure of the battery cell 6.

Fig. 6 is a schematic partial sectional view of a battery cell provided by some further embodiments of the application.

As shown in Fig. 6, in some embodiments, the accommodation recess 331 is stepped and includes a first section 331a and a second section 331b, and the second section 331b is located on a side of the first section 331a away from the first through hole 221. A cross section of the first section 331a perpendicular to an axial direction X of the first through hole 221 is smaller than a cross section of the second section 331b perpendicular to the axial direction X of the first through hole 221. The sensor 31 is accommodated in the second section 331b.

The second section 331b has a larger cross section area so as to provide a sufficient accommodation space for the sensor 31. The accommodation recess 331 is configured as a stepped shape to reduce a size of an opening of the recess 331 close to the first through hole 221, thereby increasing the contact area between the fixing body 333 and the first wall 20b, and improving stability.

In some embodiments, the fixing body 333 may be adhered to the first wall 20b. By providing the accommodation recess 331 in a stepped shape, the adhered area between the fixing body 333 and the first wall 20b can be increased.

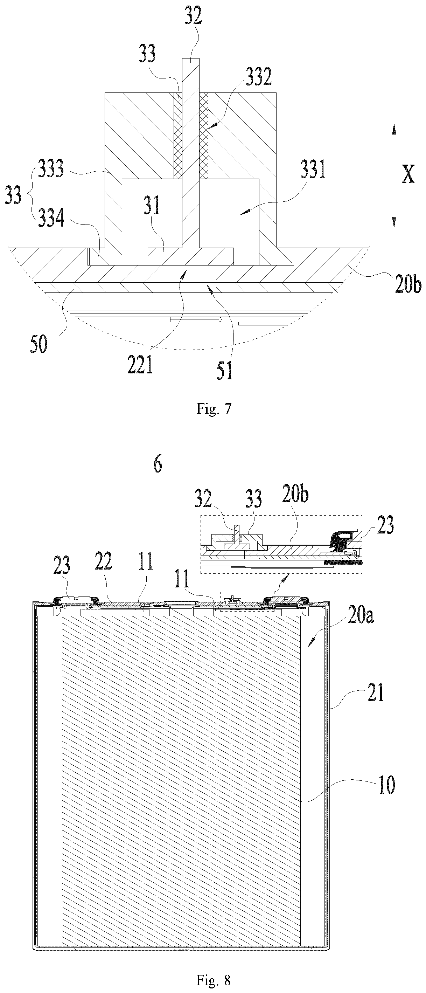

Fig. 7 is a schematic partial sectional view of a battery cell provided by some further embodiments of the application.

As shown in Fig. 7, in some embodiments, the sensor 31 is connected to the first wall 20b and covers the first through hole 221.

By connecting the sensor 31 to the first wall 20b, it is possible to reduce a risk of sensor 31 shaking during vibration of the battery cell 6, improve the stability of the sensor 31, and improve detection accuracy of the sensor 31. The sensor 31 can cover the first through hole 221 to reduce the risk of leakage of the electrolyte solution through the first through hole 221 and improve safety.

In some embodiments, the sensor 31 is adhered to the first wall 20b.

Fig. 8 is a schematic sectional view of a battery cell provided by some further embodiments of the application.

As shown in Figs. 8, in some embodiments, the housing 20 further includes an electrode terminal 23 arranged on the first wall 20b, the electrode assembly 10 includes an electrode tab 11, and the electrode terminal 23 is electrically connected to the electrode tab 11. In the direction perpendicular to the first wall 20b, the end of the fixing member 33 away from the first wall 20b does not extend beyond the electrode terminal 23.

The electrode terminal 23 is used to electrically connect the electrode assembly 10 to an external circuit so as to achieve the charging and discharging of the electrode assembly 10. Optionally, the electrode terminal 23 is used to be connected to a bus member to achieve electrical connection between battery cells 6.

For example, the electrode terminal 23 may protrude from an outer surface of the first wall 20b away from the accommodation cavity 20a to facilitate connection between the electrode terminal 23 and a busbar, reducing a risk of interference with the busbar by the first wall 20b.

The embodiments of the application can utilize the space occupied by the electrode terminal 23 in the direction perpendicular to the first wall 20b to arrange the fixing member 33, that is, the fixing member 33 will not increase the size of the battery cell 6 in the direction perpendicular to the first wall 20b, thereby improving the space utilization and energy density of the battery cell 6.

In some embodiments, the battery cell 6 is a rectangular battery cell.

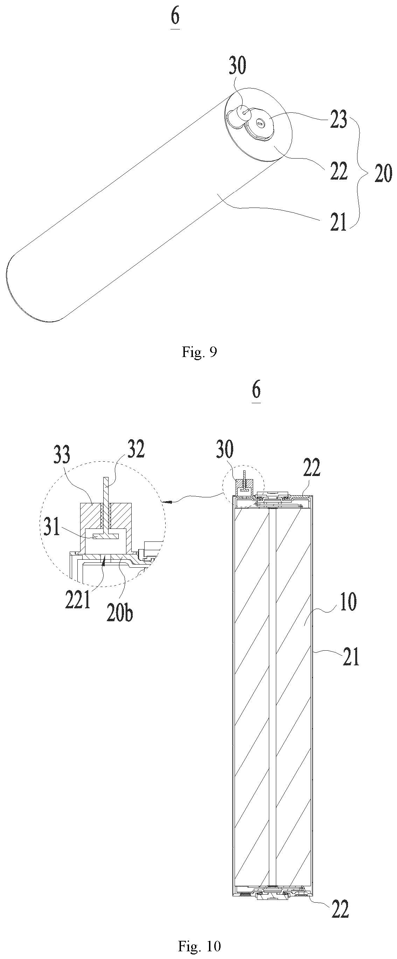

Fig. 9 is a schematic structural perspective view of a battery cell provided by some further embodiments of the application; Fig. 10 is a schematic sectional view of the battery cell as shown in Fig. 9.

As shown in Figs. 9 and 10, in some embodiments, the battery cell 6 is a cylindrical battery cell.

In some embodiments, the cylindrical battery cell and the cuboid battery cell may adopt the same detection member.

In some embodiments, the housing 20 of the battery cell 6 includes a top wall, a side wall, and a bottom wall. The side wall may be circular tubular, and the top and bottom walls are both circular plates, and are connected to two ends of the side wall. Optionally, the first wall 20b may be either the top wall or the bottom wall.

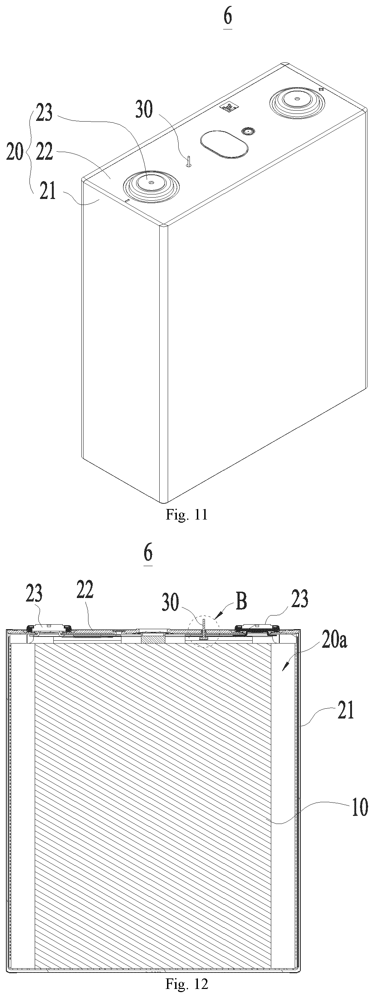

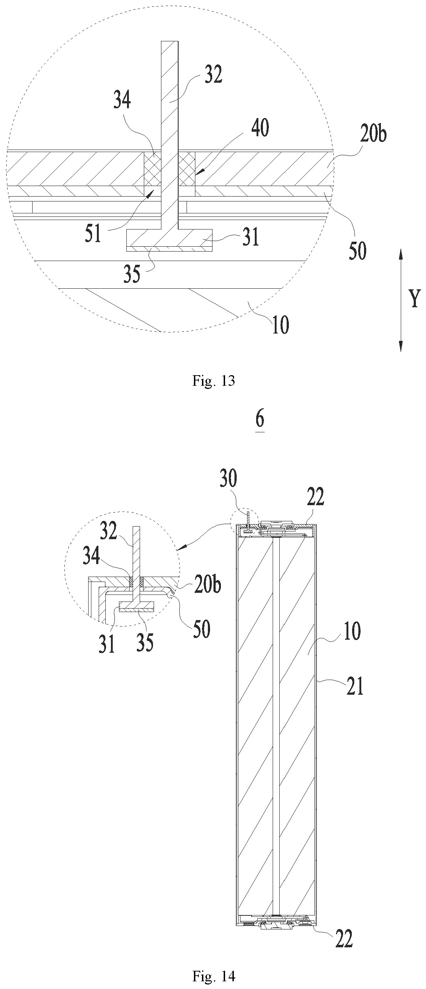

Fig. 11 is a schematic structural perspective view of a battery cell provided by some further embodiments of the application; Fig. 12 is a schematic sectional view of the battery cell as shown in Fig. 11; Fig. 13 is a schematic enlarged view at the circle B of Fig. 12.

As shown in Figs. 11 to 13, in some embodiments, the housing 20 is provided with an eduction through hole 40 in communication with the accommodation cavity 20a. The sensor 31 is received in the accommodation cavity 20a, and at least a part of the connector 32 is received in the eduction through hole 40 and connected to the housing 20.

The connector 32 may extend to the outside of the housing 20 via the eduction through hole 40 or may not extend to the outside of the housing 20.

By arranging the sensor 31 inside the accommodation cavity 20a, it is possible to improve utilization of the internal space of the battery cell 6 and improve accuracy of the sensor 31 in detecting the status information inside the battery cell 6. By providing the eduction through hole 40, it is possible to expose at least a part of the connector 32 and facilitate the connector 32 transmitting signals to the outside of the housing 20.

In some embodiments, the connector 32 is located on a side of the sensor 31 facing towards the eduction through hole 40.

In some embodiments, the detection member 30 further includes a seal 34, and the seal 34 connects a hole wall of the eduction through hole 40 and the connector 32 and seals the eduction through hole 40.

The seal 34 may be connected to the hole wall of the eduction through hole 40 and the connector 32 by adhering, interference fit, fusion or other means.

The seal 34 seals the eduction through hole 40 so as to reduce a risk of leakage of the electrolyte solution through the eduction through hole 40 and improve safety. The seal 34 can serve both the function of connecting the hole wall of the eduction through hole 40 and the connector 32 and the function of sealing, thereby simplifying the structure of the detection member 30.

In some embodiments, the seal 34 is adhered to the hole wall of the eduction through hole 40 and the connector 32. For example, a colloid may be filled between the hole wall of the eduction through hole 40 and the connector 32, and after the colloid solidifies, a seal 34 is formed.

In some embodiments, a surface of the sensor 31 facing towards the electrode assembly 10 is provided with an insulation layer 35.

By providing the insulation layer 35, it is possible to reduce a risk of the sensor 31 conducting positive and negative electrodes during vibration of the battery cell 6, and improve safety.

In some embodiments, the remaining surfaces of the sensor 31 may be provided with an insulation layer 35. For example, the surface of sensor 31 away from electrode assembly 10 may also be provided with an insulation layer 35. For example, the insulation layer 35 may be formed by spraying insulation material on the surface of the sensor 31.

In some embodiments, the housing 20 includes a first wall 20b, and the sensor 31 is located on a side of the first wall 20b facing towards the electrode assembly 10 and spaced apart from the first wall 20b.

The first wall 20b may be the end cap 22 or may also be a part of the housing 21. For example, the first wall 20b is the end cap 22.

If the sensor 31 contacts with the first wall 20b, when the battery cell 6 vibrates, stress concentration may occur at the connection between the sensor 31 and the connector 32, posing a risk of connection failure between the sensor 31 and the connector 32. The embodiments of the application, by arranging the sensor 31 spaced apart from the first wall 20b, can provide an activity space for the sensor 31, thereby reducing a force at the connection between the sensor 31 and the connector 32 during vibration of the battery cell 6, reducing a risk of connection failure between the sensor 31 and the connector 32, and improving safety of the battery cell 6.

In some embodiments, the connector 32 may be adhered to the first wall 20b or be integrated with the first wall 20b by hot melt forming.

In some embodiments, the battery cell 6 is configured to inject electrolyte solution via the eduction through hole 40.

By using the eduction through hole 40 as the liquid injection hole of the battery cell 6 and using the detection member 30 to seal the first through hole 221, it is possible to reduce openings of the housing 20 and eliminate the need for conventional sealing elements, thereby simplifying the structure of the battery cell 6.

In some embodiments, the battery cell 6 further includes an insulation member 50 arranged on the surface of the first wall 20b facing towards the electrode assembly 10. The sensor 31 is located on a side of the insulation member 50 away from the first wall 20b. The insulation member 50 is provided with a first avoidance hole 51 opposite to the eduction through hole 40, and the connector 32 extends into the eduction through hole 40 via the first avoidance hole 51.

In an axial direction Y of the eduction through hole 40, the first avoidance hole 51 and the eduction through hole 40 at least partially overlap.

The insulation member 50 is used to separate the first wall 20b from the electrode assembly 10 in an insulated way, so as to reduce a risk of the first wall 20b conducting the positive and negative electrodes of the electrode assembly 10 and improve safety. By opening the first avoidance hole 51, it is possible to reduce a risk of interference between the insulation member 50 and the connector 32.

In some embodiments, the insulation member 50 is spaced apart from the sensor 31.

By arranging the sensor 31 spaced apart from the insulation member 50, it is possible to provide an activity space for the sensor 31, thereby reducing a force at the connection between the sensor 31 and the connector 32 during vibration of the battery cell 6, reducing a risk of connection failure between the sensor 31 and the connector 32, and improving safety of the battery cell 6.

In some embodiments, a part of the connector 32 extends to the outside of the housing 20 via the eduction through hole 40.

For example, the connector 32 protrudes from an outer surface of the housing 20. Optionally, the connector 32 protrudes from the outer surface of the first wall 20b.

The connector 32 extends out of the housing, so as to facilitate connection to a device outside the housing 20.

Fig. 14 is a schematic sectional view of a battery cell provided by some further embodiments of the application.

As shown in Fig. 14, in some embodiments, the battery cell 6 is a cylindrical battery cell.

In some embodiments, the housing 20 is provided with an eduction through hole 40 in communication with the accommodation cavity 20a. The sensor 31 is received in the accommodation cavity 20a, and at least a part of the connector 32 is received in the eduction through hole 40 and connected to the housing 20.

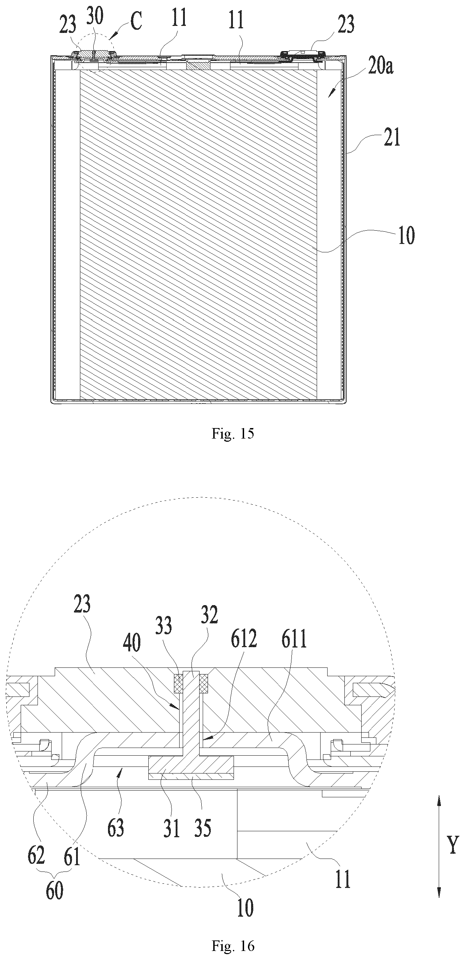

Fig. 15 is a schematic sectional view of a battery cell provided by some further embodiments of the application; Fig. 16 is a schematic enlarged view at the circle C of Fig. 15.

As shown in Figs. 15 and 16, in some embodiments, the housing 20 includes an electrode terminal 23, the electrode assembly 10 includes an electrode tab 11, and the electrode terminal 23 is electrically connected to the electrode tab 11. The eduction through hole 40 is arranged in the electrode terminal 23, and the sensor 31 is arranged on a side of the electrode terminal 23 facing towards the electrode assembly 10.

The electrode terminal 23 may be mounted at the end cap 22, or may also be mounted at the housing body 21. For example, the electrode terminal 23 is mounted to the end cap 22.

By arranging the eduction through hole 40 in the electrode terminal 23, it is possible to improve space utilization of the battery cell 6.

Compared to the housing 21 and the end cap 22, the electrode terminal 23 has a higher strength. By arranging the eduction through hole 40 in the electrode terminal 23, it is possible to improve stability of the detection member 30.

In some embodiments, the connector 32 may be adhered to the electrode terminal 23, or may also be integrated with the electrode terminal 23 by hot melt forming.

In some embodiments, the battery cell 6 further includes an adapter member 60 for connecting the electrode tab 11 and the electrode terminal 23. The adapter member 60 includes a terminal connection portion 611 abutting with a surface of the electrode terminal 23 facing towards the electrode assembly 10, and the terminal connection portion 611 is provided with a second avoidance hole 612 opposite to the eduction through hole 40. The sensor 31 is located on a side of the terminal connection portion 611 away from the electrode terminal 23, and the connector 32 extends into the eduction through hole 40 via the second avoidance hole 612.

In the axial direction Y of the eduction through hole 40, the second avoidance hole 612 and the eduction through hole 40 at least partially overlap.

By opening the second avoidance hole 612, it is possible to reduce a risk of interference between the adapter member 60 and the connector 32, allowing the connector 32 to smoothly extend into the eduction through hole 40.

In some embodiments, the terminal connection portion 611 is spaced apart from the sensor 31.

By arranging the sensor 31 spaced apart from the terminal connection portion 611, it is possible to provide an activity space for the sensor 31, thereby reducing a force at the connection between the sensor 31 and the connector 32 during vibration of the battery cell 6, reducing a risk of connection failure between the sensor 31 and the connector 32, and improving safety of the battery cell 6.

In some embodiments, the connector 32 does not protrude from a surface of the electrode terminal 23 away from the electrode assembly 10.

The surface of the electrode terminal 23 away from the electrode assembly 10 usually need to be connected to a busbar. The embodiments of the application can reduce a risk of interference between the connector 32 and the busbar.

In some embodiments, the adapter member 60 includes an adapter body 62 and an adapter protrusion 61, the adapter body 62 is connected to the electrode tab 11, and the adapter protrusion 61 protrudes from a surface of the adapter body 62 facing towards the electrode terminal 23. The adapter member 60 forms an adapter recess 63 at a position corresponding to the adapter protrusion 61, and a bottom wall of the adapter recess 63 forms the terminal connection portion 611. The sensor 31 is accommodated in the adapter recess 63.

By arranging the sensor 31 in the adapter recess 63, it is possible to improve space utilization. The side wall of the adapter recess 63 can limit the sensor 31 so as to reduce the amplitude of the sensor 31 shaking during vibration of the battery cell 6.

In some embodiments, the terminal connection portion 611 is welded to the electrode terminal 23. By opening the adapter recess 63, it is possible to reduce a thickness of the terminal connection portion 611, thereby reducing the difficulty of welding the terminal connection portion 611 to the electrode terminal 23.

According to some embodiments of the application, the application further provides a battery including a plurality of battery cells according to any of the above embodiments.

According to some embodiments of the application, the application further provides an electric device including the battery cell according to any of the above embodiments used to provide electrical energy. The electric device may be any apparatus or system employing the battery cell described above.

As shown in Figs. 3 to 5, the embodiments of the application provide a cuboid battery cell 6 including a housing 20, an electrode assembly 10 and a detection member 30. The housing 20 includes a housing body 21 and an end cap 22, the housing body 21 has an opening, and the end cap 22 is used to cap the opening. The housing body 21 and the end cap 22 are enclosed to form an accommodation cavity 20a. The electrode assembly 10 is received in the accommodation cavity 20a. The end cap 22 is provided with an first through hole 221 in communication with the accommodation cavity 20a.

The detection member 30 includes a sensor 31, a connector 32, and a fixing member 33. The connector 32 includes an optical fiber, and the connector 32 is connected to the sensor 31 and forms an optical fiber sensor 31 with the sensor 31.

The surface of the fixing member 33 facing towards the end cap 22 abuts with the end cap 22, and the fixing member 33 is welded to the end cap 22. The fixing member 33 is provided with an accommodation recess 331 recessed from the surface of the fixing member 33 facing towards the end cap 22, and the accommodation recess 331 is in communication with the first through hole 221. The bottom wall of the accommodation recess 331 is provided with a second through hole 332. The sensor 31 is accommodated in the accommodation recess 331, and the connector 32 is connected to the fixing member 33 and passes through the second through hole 332.

The sensor 31 is used to detect status information of the battery cell 6 and generate a signal, the connector 32 being used to transmit the signal.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A battery cell, comprising:
a housing comprising an accommodation cavity;
an electrode assembly received in the accommodation cavity; and
a detection member comprising a sensor and a connector, the sensor being connected to the housing by the connector, and the sensor being used to detect status information of the battery cell and generate a signal, the connector being used to transmit the signal.

2. The battery cell according to claim 1, wherein the status information of the battery cell comprises at least one of an internal gas pressure of the battery cell, a temperature of the battery cell, an internal gas composition of the battery cell or a deformation amount of the electrode assembly.

3. The battery cell according to claim 1 or 2, wherein the connector comprises an optical fiber.

4. The battery cell according to any of claims 1-3, wherein the sensor comprises at least one of: a Bragg grating or a Fabry Perot resonant cavity.

5. The battery cell according to any of claims 1-4, wherein the housing comprises a first wall, and the first wall is provided with a first through hole in communication with the accommodation cavity;
the sensor is located on a side of the first wall away from the accommodation cavity, and the sensor is configured to detect the status information of the battery cell by the first through hole.

6. The battery cell according to claim 5, wherein in an axial direction of the first through hole, the sensor is opposite to the first through hole.

7. The battery cell according to claim 6, wherein the sensor is connected to the first wall and covers the first through hole.

8. The battery cell according to claim 5 or 6, wherein the detection member further comprises a fixing member, and the connector is connected to the first wall by the fixing member.

9. The battery cell according to claim 8, wherein a surface of the fixing member facing towards the first wall abuts with the first wall, the fixing member is provided with an accommodation recess recessed from the surface of the fixing member facing towards the first wall, and the accommodation recess is in communication with the first through hole;
the sensor is accommodated in the accommodation recess, and the connector is connected to the fixing member and passes through the fixing member.

10. The battery cell according to claim 9, wherein a bottom wall of the accommodation recess is provided with a second through hole, and the connector passes through the fixing member via the second through hole.

11. The battery cell according to claim 10, wherein the detection member further comprises a seal, and the seal connects a hole wall of the second through hole and the connector and seals the second through hole.

12. The battery according to claim 11, wherein the seal is adhered to the hole wall of the second through hole and the connector.

13. The battery cell according to any of claims 9-12, wherein the fixing member is welded to the first wall.

14. The battery cell according to any of claims 9-13, wherein a side of the first wall away from the accommodation cavity is provided with a positioning recess, and the first through hole penetrates through a bottom wall of the positioning recess;
at least a part of the fixing member is accommodated in the positioning recess.

15. The battery cell according to claim 14, wherein the fixing member comprises a fixing body and a flange surrounding outside the fixing body, the fixing body is provided with the accommodation recess, at least a part of the flange is accommodated in the positioning recess, and an outer peripheral surface of the flange is connected to a side wall of the positioning recess.

16. The battery cell according to claim 15, wherein the flange abuts with the bottom wall of the positioning recess.

17. The battery cell according to any of claims 9-16, wherein the accommodation recess is stepped and comprises a first section and a second section, and the second section is located on a side of the first section away from the first through hole;
a cross section of the first section perpendicular to an axial direction of the first through hole is smaller than a cross section of the second section perpendicular to the axial direction of the first through hole;
the sensor is accommodated in the second section.

18. The battery cell according to any of claims 9-17, wherein the housing further comprises an electrode terminal arranged on the first wall, the electrode assembly comprises an electrode tab, and the electrode terminal is electrically connected to the electrode tab;
in a direction perpendicular to the first wall, an end of the fixing member away from the first wall does not extend beyond the electrode terminal.

19. The battery cell according to any of claims 5-18, is configured to inject electrolyte solution via the first through hole.

20. The battery cell according to any of claims 1-4, wherein the housing is provided with an eduction through hole in communication with the accommodation cavity;
the sensor is accommodated in the accommodation cavity, and at least a part of the connector is accommodated in the eduction through hole and connected to the housing.

21. The battery cell according to claim 20, wherein the detection member further comprises a seal, and the seal connects a hole wall of the eduction through hole and the connector and seals the eduction through hole.

22. The battery cell according to claim 20 or 21, wherein a surface of the sensor facing towards the electrode assembly is provided with an insulation layer.

23. The battery cell according to any of claims 20-22, wherein the housing comprises a first wall, and the sensor is located on a side of the first wall facing towards the electrode assembly and spaced apart from the first wall.

24. The battery cell according to claim 23, is configured to inject electrolyte solution via the eduction through hole.

25. The battery cell according to claim 23 or 24, further comprises an insulation member, arranged on the surface of the first wall facing towards the electrode assembly;
the sensor is located on a side of the insulation member away from the first wall; the insulation member is provided with a first avoidance hole opposite to the eduction through hole, and the connector extends into the eduction through hole via the first avoidance hole.

26. The battery cell according to claim 25, wherein the insulation member is spaced apart from the sensor.

27. The battery cell according to any of claims 23-26, wherein a part of the connector extends to the outside of the housing via the eduction through hole.

28. The battery cell according to any of claims 5-19 and 23-27, wherein the housing comprises a housing body and an end cap, the housing body comprises an opening, and the end cap is used to cap the opening;
the end cap is the first wall of the housing.

29. The battery cell according to any of claims 20-22, wherein the housing comprises an electrode terminal, the electrode assembly comprises an electrode tab, and the electrode terminal is electrically connected to the electrode tab;
the eduction through hole is arranged in the electrode terminal, and the sensor is arranged on a side of the electrode terminal facing towards the electrode assembly.

30. The battery cell according to claim 29, further comprises an adapter member for connecting the electrode tab and the electrode terminal;
the adapter member comprises a terminal connection portion abutting with a surface of the electrode terminal facing towards the electrode assembly, and the terminal connection portion is provided with a second avoidance hole opposite to the eduction through hole;
the sensor is located on a side of the terminal connection portion away from the electrode terminal, and the connector extends into the eduction through hole via the second avoidance hole.

31. The battery cell according to claim 30, wherein the terminal connection portion is spaced apart from the sensor.

32. The battery cell according to claim 30 or 31, wherein the connector does not protrude from a surface of the electrode terminal away from the electrode assembly.

33. The battery cell according to any of claims 30-32, wherein the adapter member comprises an adapter body and an adapter protrusion, the adapter body is connected to the electrode tab, and the adapter protrusion protrudes from a surface of the adapter body facing towards the electrode terminal;
the adapter member forms an adapter recess at a position corresponding to the adapter protrusion, and a bottom wall of the adapter recess forms the terminal connection portion;
the sensor is accommodated in the adapter recess.

34. The battery cell according to any of claims 1-33, wherein the battery cell is a cylindrical battery cell or a cuboid battery cell.

35. A battery, comprising the battery cell according to any of claims 1-34.

36. An electric device, comprising the battery cell according to any of claims 1-34 used to provide electrical energy.
